# FASCICULE DE BREVET EUROPEEN

(11) **EP 4 308 794 B1**
(45) Date de publication et mention de la délivrance du brevet: **11.02.2026**
(21) Numéro de dépôt: 22712990.5
(22) Date de dépôt: 15.03.2022
(51) Int. Cl.: F01D 7/02, B64C 11/38, F01D 25/16, F01D 25/18, F04D 29/36, F16H 57/04

(54) **MODULE DE SOUFFLANTE ÉQUIPÉ D'UN DISPOSITIF DE TRANSFERT D'HUILE**
FANMODUL AUSGESTATTET MIT EINER ÖLTRANSFERVORRICHTUNG
FAN MODULE EQUIPPED WITH AN OIL TRANSFER DEVICE

(30) Priorité: 16.03.2021 FR 2102622
(43) Date de publication de la demande: 24.01.2024
(73) Titulaire: SAFRAN AIRCRAFT ENGINES, 75015 Paris (FR)
(72) Inventeur: LEVISSE, Paul Ghislain Albert, 77550 MOISSY-CRAMAYEL (FR); FRANTZ, Caroline Marie, 77550 MOISSY-CRAMAYEL (FR); DESOMBRE, Didier Gabriel Bertrand, 77550 MOISSY-CRAMAYEL (FR); PERDRIGEON, Christophe Marcel Lucien, 77550 MOISSY-CRAMAYEL (FR); TAILLANT, Jean-Claude Christian, 77550 MOISSY-CRAMAYEL (FR)
(74) Mandataire: Gevers & Orès
(86) Numéro de dépôt international: PCT/FR2022/050468
(87) Numéro de publication internationale: WO 2022/195217

(56) Documents cités:
- EP-A1- 3 138 771
- EP-A1- 3 179 044
- WO-A1-2015/102779
- WO-A2-2013/011225
- GB-A- 824 332
- US-A1- 2004 037 483

## Description

### Domaine technique de l'invention

La présente invention concerne un module de soufflante pour une turbomachine d'aéronef, ce module comportant un dispositif de transfert d'huile.

### Arrière-plan technique

Une turbomachine d'aéronef comprend classiquement un générateur de gaz comportant, de l'amont vers l'aval selon le sens d'écoulement des gaz en fonctionnement, au moins un compresseur, une chambre annulaire de combustion et au moins une turbine.

Les gaz qui pénètrent dans le générateur de gaz sont comprimés dans le ou les compresseurs puis mélangés à du carburant et brûlés dans la chambre de combustion. Les gaz de combustion s'écoulent et se détendent dans la ou les turbine pour entraîner son rotor ou leurs rotors.

Dans le cas d'une turbomachine à double corps, respectivement basse pression et haute pression, le rotor de la turbine haute pression est relié par un arbre haute pression au rotor du compresseur haute pression, et le rotor de la turbine basse pression est relié par un arbre basse pression au rotor du compresseur basse pression.

La turbomachine peut être équipée d'une ou plusieurs hélices, carénées ou non carénées. Dans le cas d'une hélice carénée située à l'amont du générateur de gaz, cette hélice est appelée soufflante et est entraînée par l'arbre basse pression du générateur de gaz.

La soufflante génère un flux de gaz en fonctionnement qui se divise en un premier flux, appelé flux primaire qui s'écoule dans le générateur de gaz comme évoqué dans ce qui précède, et en un second flux, appelé flux secondaire, qui s'écoule autour du générateur de gaz.

Le taux de dilution, qui est le rapport entre le débit du flux secondaire et le débit du flux primaire, est de plus en plus important dans les turbomachines modernes, ce qui se traduit par une augmentation du diamètre de la soufflante et une diminution du diamètre du générateur de gaz.

Pour limiter la vitesse de rotation de la soufflante, en particulier des turbomachines à fort taux de dilution, il est connu d'entraîner cette soufflante par l'intermédiaire d'un réducteur en général du type à train épicycloïdal ou planétaire. L'arbre basse pression entraîne ainsi la soufflante par l'intermédiaire du réducteur.

Une soufflante, ou une hélice en général, peut comprendre des pales à calage variable, c'est-à-dire que chacune des pales a une orientation autour d'un axe radial qui peut être réglée avec précision. Les pales sont portées par un moyeu en forme d'anneau polygonal et sont déplacées en rotation autour de ces axes par l'intermédiaire d'un actionneur hydraulique commun qui est monté à l'intérieur du moyeu. Cet actionneur est alimenté en huile et peut se situer dans un repère tournant lorsqu'il est solidaire en rotation du moyeu et de la soufflante.

La turbomachine comprend un système de lubrification comportant un réservoir d'huile et une pompe, qui est en général situé dans un repère fixe. On comprend donc que l'alimentation en huile de l'actionneur depuis le système de lubrification doit se faire par un dispositif de transfert d'huile depuis un repère fixe jusqu'à un repère tournant. Un dispositif de ce type est couramment appelé OTB, acronyme de l'expression anglo-saxonne *Oil Transfer Bearing.*

Ce type de dispositif peut être monté dans une turbomachine à soufflante du type précité pour alimenter l'actionneur en huile mais aussi pour alimenter le réducteur en huile de lubrification. Ce type de dispositif peut aussi être monté dans un autre type de turbomachine, telle que par exemple une turbomachine équipée d'une hélice non carénée à pales à calage variable, du type turbopropulseur.

Dans la technique actuelle, un dispositif de transfert d'huile comprend un anneau de stator qui comporte une surface cylindrique interne et des canalisations internes d'huile qui débouchent chacune sur cette surface cylindrique interne. Ces canalisations sont reliées par des conduites au système de lubrification précité.

Le dispositif comprend en outre un arbre engagé dans l'anneau et mobile en rotation autour d'un axe à l'intérieur de cet anneau. L'arbre comporte une surface cylindrique externe s'étendant à l'intérieur de la surface cylindrique interne de l'anneau, et des canalisations internes d'huile qui débouchent chacune sur cette surface cylindrique externe. Ces canalisations sont reliées par des conduites à l'actionneur pour son alimentation en huile.

Dans la technique actuelle, la surface cylindrique externe de l'arbre comprend des rainures annulaires de logement de segments annulaires d'étanchéité. Ces segments sont aptes à se déplacer dans les rainures et sont configurés pour prendre appui radialement sur la surface interne de l'anneau pour limiter et maitriser les fuites d'huile. Les débouchés des canalisations précitées sont situés entre deux segments adjacents qui assurent donc qu'un maximum d'huile apportée par chaque canalisation de l'anneau alimente une canalisation correspondante de l'arbre. Le nombre de segments est égal au double du nombre de canalisations. Le document GB-A-824,332 décrit un dispositif de transfert d'huile de ce type.

Cependant, cette technologie n'est pas satisfaisante pour plusieurs raisons. Les déformations en fonctionnement (liées aux dilatations thermiques différentielles et aux efforts) et les tolérances de fabrication et de montage des pièces font qu'il est difficile de maitriser précisément ces fuites. Le dispositif comprend de nombreuses pièces, ce qui complexifie le montage. La fabrication et l'assemblage d'un tel dispositif sont donc relativement longs et coûteux. Par ailleurs, plus le nombre de canalisations du dispositif est important et plus le nombre de segments d'étanchéité est important et plus la dimension axiale et donc l'encombrement axial du dispositif sont importants pour pouvoir monter ces différents segments. Un dispositif de transfert d'huile peut être complexe à intégrer dans une turbomachine du fait de son encombrement. Enfin, la durée de vie d'un tel dispositif est en général limitée du fait de désalignements potentiels entre l'arbre et l'anneau en fonctionnement et de l'usure des segments d'étanchéité qui peut être accentuée par ces désalignements ainsi que par la vitesse de rotation de l'arbre. Plus le diamètre du dispositif est important, et plus la vitesse périphérique de l'arbre et l'usure des segments sont importantes.

Il serait avantageux de prévoir un palier lisse entre les surfaces de l'anneau et de l'arbre. Une solution consisterait alors à monter une première frette sur la surface interne de l'anneau et une seconde frette sur la surface externe de l'arbre, de façon à ce que ces frettes définissent entre elles le palier lisse. Ces frettes comprendraient alors des orifices de passage d'huile en communication fluidique avec les canalisations de l'anneau et de l'arbre, afin d'alimenter en huile le palier lisse. Pour maintenir le jeu entre les frettes et éviter des désalignements entre elles, il pourrait être utile de prévoir également des paliers à roulement de part et d'autre du palier lisse, dont les bagues internes et externes seraient respectivement montés sur l'arbre et l'anneau.

Cependant, cette solution ne serait pas satisfaisante car le nombre de pièces du dispositif de transfert serait important (paliers avec rouleaux et bagues, frettes, etc.) et le montage du dispositif serait complexe et coûteux à réaliser. L'invention propose ainsi un dispositif de transfert d'huile perfectionné qui résout tout ou partie des problèmes de la technique antérieure.

L'art antérieur comprend également les documents GB-A-824332, US-A1-2004/037483, EP-A1-3179044, WO-A1-2015/102779, WO-A2-2013/011225 et EP-A1-3138771.

### Résumé de l'invention

L'invention concerne un module de soufflante pour une turbomachine d'aéronef, ce module comportant une soufflante qui comporte un arbre de soufflante et des aubes de soufflante à calage variable, et un dispositif de transfert d'huile configuré pour assurer un transfert d'huile entre un stator et un actionneur qui est solidaire en rotation de l'arbre de soufflante et qui est configuré pour contrôler le calage des aubes de soufflante, ce dispositif comportant :
- un anneau de stator comportant une première surface cylindrique, par exemple interne, et des canalisations internes d'huile qui débouchent chacune sur ladite première surface cylindrique, et
- un arbre engagé dans ou sur ledit anneau et comportant une seconde surface cylindrique s'étendant à l'intérieur ou autour de ladite première surface cylindrique, l'arbre comportant des canalisations internes d'huile qui débouchent chacune sur ladite seconde surface cylindrique,

caractérisé en ce qu'il comprend en outre :
   - un palier lisse situé entre lesdites première et seconde surfaces cylindriques, et
   - des paliers à roulement montés entre l'anneau et l'arbre, de part et d'autre du palier lisse, chacun de ces paliers à roulement comportant des éléments roulants entre deux pistes annulaires de roulement,
en ce que l'un des éléments choisi parmi l'anneau et l'arbre porte des bagues définissant des premières pistes des paliers à roulement, les secondes pistes de roulement de ces paliers à roulement étant intégrées à l'autre de ces éléments,
et en ce que le palier lisse est réalisé par une seule frette intercalée entre les première et seconde surfaces cylindriques, et fixée sur l'un desdits éléments. L'invention propose ainsi un dispositif de transfert d'huile dépourvu d'organes ou de segments d'étanchéité entre les surfaces cylindriques en regard de l'anneau de stator et de l'arbre. A la place, un palier lisse est prévu entre ces surfaces. Des paliers à roulement sont montés de part et d'autre de ce palier lisse de façon à garantir l'épaisseur radiale du palier lisse, quels que soient le régime de la turbomachine et la vitesse périphérique de l'arbre du dispositif de transfert. Les paliers à roulement sont automatiquement lubrifiés par l'huile qui fuit du palier lisse en fonctionnement. Les paliers à roulement assurent en outre la limitation des fuites d'huile à l'extérieur du palier lisse et du dispositif. Les paliers à roulement permettent en outre de supprimer les risques de désalignements entre l'anneau et l'arbre et donc les risques de contact entre eux et d'usure. Les segments d'étanchéité ne constituent donc plus des pièces d'usure du dispositif qui a donc une durée de vie optimisée par rapport à la technique antérieure.

Par ailleurs, le nombre de pièces du dispositif est réduit par l'utilisation d'une seule frette au lieu de deux et par l'utilisation de paliers à roulement avec des bagues intégrées à l'anneau ou à l'arbre. Ceci permet de limiter les empilements de tolérances d'assemblage et d'usinage. L'invention permet de faciliter la réalisation et le montage du dispositif.

Le module selon l'invention peut comprendre une ou plusieurs des caractéristiques suivantes, prises isolément les unes des autres, ou en combinaison les unes avec les autres :
- les paliers à roulement sont à rouleaux,
- l'un des éléments porte les bagues des paliers à roulement ainsi que la frette ;
- la frette a deux surfaces cylindriques s'étendant l'une autour de l'autre, dont une surface cylindrique de frettage et une surface cylindrique de centrage, cette surface cylindrique de centrage ayant un diamètre égal aux diamètres des secondes pistes de roulement ;
- l'anneau de stator porte les bagues et la frette ;
- les bagues des paliers à roulement ont des diamètres internes identiques ;
- l'un des éléments porte les bagues et l'autre des éléments porte la frette ;
- l'anneau porte la frette et l'arbre porte les bagues ;
- la frette a deux surfaces cylindriques s'étendant l'une autour de l'autre, dont une surface cylindrique de frettage sur l'anneau et une surface cylindrique de centrage sur l'arbre, les bagues des paliers à roulement ayant des diamètres internes différents l'un de l'autre et différents du diamètre de la surface cylindrique interne de la frette ;
- la frette comprend des orifices qui sont d'une part situés en regard des débouchés des canalisations de l'un des éléments, et qui sont en communication fluidique avec les canalisations de l'autre des éléments par l'intermédiaire de gorges annulaires formées au niveau des débouchés des canalisations de cet autre élément ;
- la soufflante est entrainée en rotation par un réducteur, ledit dispositif étant monté en amont du réducteur et étant configuré pour alimenter en huile le réducteur ainsi que l'actionneur voire également le réducteur,
- la soufflante est entraînée par l'arbre de soufflante qui est guidé par des paliers à roulement et qui est accouplé à l'arbre du dispositif,
   -- le réducteur est du type planétaire, c'est-à-dire à porte-satellites immobile en rotation et donc à couronne mobile en rotation,
   -- le réducteur est du type épicycloïdale, c'est-à-dire à couronne immobile en rotation et donc à porte-satellites mobile en rotation,
   -- le dispositif alimente le réducteur en huile de lubrification, et en particulier au moins une partie de ses paliers et dentures,
   -- le dispositif est configuré pour alimenter l'actionneur à une pression d'huile comprise entre 2 et 200 bars, et de préférence entre 5 et 130 bars,
   -- le dispositif est configuré pour alimenter le réducteur à une pression d'huile comprise entre 2 et 50 bars, et de préférence entre 5 et 20 bars. L'invention concerne également une turbomachine d'aéronef, comportant un module tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une demi vue schématique en coupe axiale d'une turbomachine équipée d'un dispositif de transfert d'huile,
[Fig.2] la figure 2 est une vue à plus grande échelle d'une partie de la figure 1,
[Fig.3] la figure 3 est une demi vue schématique en coupe axiale d'un dispositif de transfert d'huile selon la technique antérieure,
[Fig.4] la figure 4 est une demi vue schématique en coupe axiale d'un dispositif de transfert d'huile selon un premier mode de réalisation de l'invention, et
[Fig.5] la figure 5 est une demi vue schématique en coupe axiale d'un dispositif de transfert d'huile selon un second mode de réalisation de l'invention.

### Description détaillée de l'invention

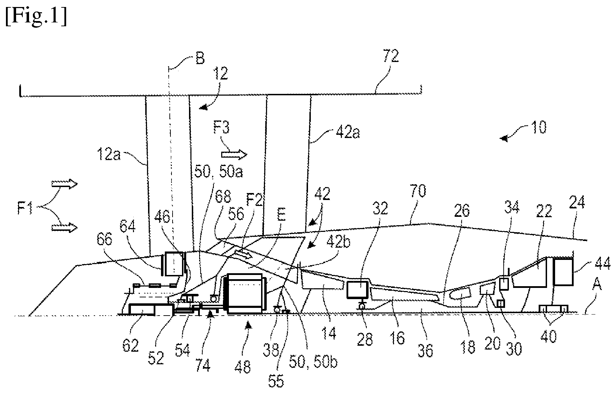

La figure 1 montre une turbomachine 10 qui comporte, de manière classique, une soufflante 12, un compresseur basse pression (BP) 14, un compresseur haute pression (HP) 16, une chambre annulaire de combustion 18, une turbine haute pression (HP) 20, une turbine basse pression (BP) 22 et une tuyère d'échappement 24.

Les rotors du compresseur haute pression 16 et de la turbine haute pression 20 sont reliés entre eux par un arbre haute pression 26 et forment avec lui un corps haute pression (HP) qui est guidé en rotation autour de l'axe A longitudinal de la turbomachine par des paliers à roulements 28, 30. Un premier palier 28 est monté entre une extrémité amont de l'arbre 26 et du corps HP et un carter inter compresseur 32 situé entre les compresseurs BP 14 et HP 16. Un second palier 30 est monté entre une extrémité aval de l'arbre 26 et du corps HP et un carter inter turbine 34 situé entre les turbines BP 22 et HP 24.

Les rotors du compresseur BP 14 et de la turbine BP 22 sont reliés entre eux par un arbre basse pression 36 et forment avec lui un corps basse pression (BP) qui est guidé en rotation autour de l'axe A longitudinal de la turbomachine par des paliers à roulements 38, 40. Au moins un palier 38 est monté entre une extrémité amont de l'arbre 36 et du corps BP et un carter d'entrée 42 situé en amont du compresseur BP 14. D'autres paliers 40 sont montés entre une extrémité aval de l'arbre 36 et du corps BP et un carter d'échappement 44 situé en aval de la turbine BP 22.

La soufflante 12 est entraînée par un arbre de soufflante 46 qui est entrainé par l'arbre BP 36 au moyen d'un réducteur 48. Ce réducteur 48 est généralement de type planétaire ou épicycloïdal.

La description qui suit concerne un réducteur du type planétaire, dont le porte-satellites et le solaire sont mobiles en rotation, la couronne du réducteur étant fixe dans le repère du moteur.

Le réducteur 48 est positionné dans la partie amont de la turbomachine. Une structure fixe comportant schématiquement, ici, une partie amont 50a et une partie aval 50b qui compose le carter moteur ou stator 50 est agencée de manière à former une enceinte E entourant le réducteur 48. Cette enceinte E est ici fermée en amont par une étanchéité 52 au niveau d'un palier 54 permettant la traversée de l'arbre de soufflante 46, et en aval par une étanchéité 55 au niveau du palier 38 permettant la traversée de l'arbre BP 36.

L'enceinte E est disposée à l'intérieur du carter d'entrée 42 qui est situé entre un aubage redresseur d'entrée 56 et le compresseur BP 14.

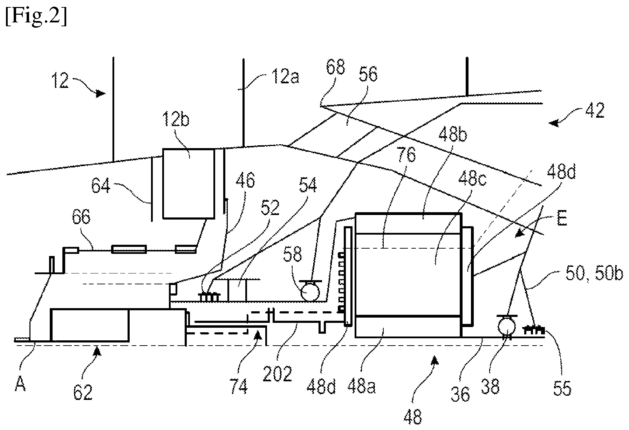

La figure 2 montre le réducteur 48 à plus grande échelle.

Le réducteur 48 comprend un solaire 48a centré sur l'axe A et accouplé à l'arbre BP 36 par exemple par l'intermédiaire de cannelures.

Le réducteur 48 comprend une couronne 48b qui est mobile en rotation autour de l'axe A et est reliée à l'arbre de soufflante 46 pour son entraînement en rotation. La couronne 48b est guidée par deux paliers 54, 58 portés par le carter d'entrée 42, ces paliers 54, 58 étant situés en amont du réducteur 48.

Le réducteur 48 comprend enfin des satellites 48c qui sont disposés autour de l'axe A et engrenés avec le solaire 48a et la couronne 48b. Ces satellites 48c sont portés par un porte-satellites 48d qui est fixée au carter d'entrée 42. La soufflante 12 de la figure 1 comprend des pales 12a à calage variable et est associée à un actionneur 62 qui permet de commander de manière centralisée le positionnement des pales 12a autour de leurs axes B, qui sont en général des axes radiaux par rapport à l'axe A de la turbomachine.

Chacune des pales 12a comprend un pied 12b formant un pivot qui est logé dans un logement d'un moyeu 64 en forme d'anneau polygonal, et qui est relié par un système de liaison 66 à un piston de l'actionneur 62.

L'actionneur 62 s'étend le long de l'axe A et son piston est mobile en translation le long de cet axe, par exemple depuis une première position dans laquelle les pales 12a sont en drapeau jusqu'à une seconde position dans laquelle les pales 12a obstruent le passage d'air à travers la soufflante 12.

Le flux d'air F1 qui traverse la soufflante 12 est divisé en deux flux annulaires et coaxiaux en aval de la soufflante, par un séparateur annulaire 68 qui s'étend autour de l'aubage 56. Un premier flux d'air appelé flux primaire F2 s'écoule dans une veine primaire et traverse cet aubage 56 et s'écoule dans les compresseurs 14 et 16 pour être comprimé. Cet air comprimé est ensuite mélangé à du carburant puis brûlé dans la chambre de combustion 18. Les gaz de combustion sont ensuite détendus dans les turbines 20, 22 pour entraînés leurs rotors et les arbres BP 36 et HP 26, puis s'écoulent dans la tuyère 24.

Un second flux d'air appelé flux secondaire F3 s'écoule dans une veine secondaire qui est définie intérieurement par un carter annulaire de moteur 70 qui s'étend longitudinalement autour des compresseurs 14, 16, de la chambre de combustion 18 et des turbines 20, 22, et extérieurement par un carter annulaire de nacelle 72 qui s'étend longitudinalement autour de la soufflante 12 et d'une partie du moteur. Ce carter de nacelle 72 est relié au moteur par des aubes directrices de sortie42a du carter d'entrée 42. Ces aubes directrices 42a sont structurales et sont configurées pour redresser le flux d'air sortant de la soufflante 12.

L'actionneur 62 est hydraulique et fonctionne avec un fluide, de l'huile, qui provient d'un système de lubrification situé en général dans la nacelle ou entre les compresseurs 14, 16 et le carter 70 (c'est-à-dire dans le moteur) et donc dans un repère fixe de la turbomachine. Au contraire, l'actionneur 62 est situé dans un repère tournant.

Comme cela est visible à la figure 2, la turbomachine 10 comprend un dispositif 74 de transfert d'huile depuis le repère fixe du moteur jusqu'au repère tournant dans lequel se situe l'actionneur 62.

Dans l'exemple représenté, le dispositif 74 est situé en amont du réducteur 48 et comprend une ou plusieurs voies 76 d'alimentation en huile pour alimenter l'actionneur 62 voire aussi pour éventuellement lubrifier le réducteur 48.

Le trait en pointillé de la figure 2 symbolise une de ces voies sur tout son trajet, du repère fixe à l'actionneur 62 : traversée de la veine primaire jusqu'au dispositif 74, traversée du réducteur 48 (entre ses satellites ou à travers les axes de ces satellites), et cheminement le long du porte-satellites puis de l'arbre de soufflante 46.

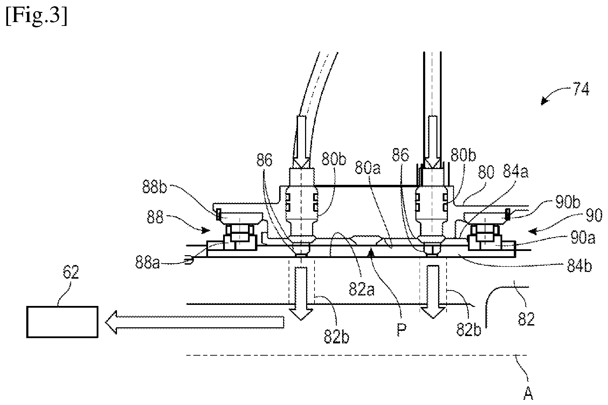

La figure 3 illustre un dispositif 74 de transfert d'huile qui comprend :
- un anneau de stator 80 comportant une surface cylindrique interne 80a et des canalisations internes 80b d'huile qui débouchent chacune sur ladite surface cylindrique interne 80a,
- un arbre 82 engagé dans l'anneau de stator 80 et mobile en rotation autour de l'axe A à l'intérieur de cet anneau 80, l'arbre 82 comportant une surface cylindrique externe 82a s'étendant à l'intérieur de la surface 80a, et des canalisations internes 82b d'huile qui débouchent chacune sur la surface 82a.

Un palier lisse P est agencé entre les surfaces 80a, 82a. Pour cela, une première frette 84a est montée dans l'anneau 80 et recouvre sa surface interne 80a, et une seconde frette 84b est montée sur l'arbre 82 et recouvre sa surface externe 82a.

Les frettes permettent un usinage précis des surfaces du palier lisse, cet usinage étant plus difficile lorsqu'il est réalisé directement sur une pièce, en particulier à l'intérieur de l'anneau. Ces frettes 84a, 84b définissent entre elles le palier lisse P et comprennent des orifices 86 de passage d'huile en communication fluidique avec les canalisations 80b, 82b de l'anneau 80 et de l'arbre 82, afin d'alimenter en huile le palier lisse P.

Des paliers à roulement 88, 90 sont montés entre l'anneau 80 et l'arbre, 82, de part et d'autre du palier lisse P. Chacun de ces paliers 88, 90 comprend une bague interne 88a, 90a qui est montée sur la frette 84b et une bague externe 88b, 90b qui est montée dans l'anneau 80.

Cette technologie présente de nombreux problèmes décrits plus haut.

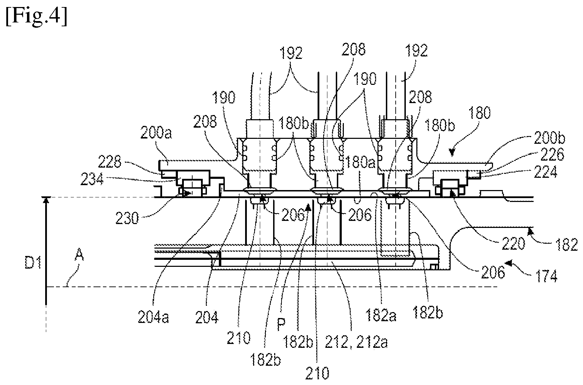

La présente invention permet de remédier à tout ou partie de ces problèmes grâce à un dispositif de transfert d'huile dont un premier mode de réalisation est illustré à la figure 4.

Les chiffres de référence utilisés dans ce qui précède pour désigner certains éléments sont repris dans la description qui suit et dans les figures 6 et 7 dans la mesure où ils désignent ces mêmes éléments.

Le dispositif 174 de transfert d'huile de la figure 4 comprend également un anneau de stator 180 et un arbre 182 engagé dans l'anneau de stator 180 et mobile en rotation autour de l'axe A à l'intérieur de cet anneau 180.

L'anneau 180 comporte une surface cylindrique interne 180a et des canalisations internes 180b d'huile qui débouchent chacune sur la surface 180a. Les canalisations 180b ont toutes une orientation radiale et sont disposées les unes derrière les autres le long de l'axe A. Elles sont au nombre de trois dans l'exemple représenté.

Bien que les canalisations 180b soient ici représentées dans un même plan axial, elles pourraient être situées respectivement dans des plans axiaux différents. Cela dépend notamment des conduites 192 auxquelles elles sont reliées et des bras 42b à travers lesquels transitent ces conduites. Dans encore une autre variante, les canalisations 180b pourraient comprendre des extrémités radialement externes situées dans un même plan axial et des extrémités réparties angulairement autour de l'axe A et débouchant sur la surface 180a.

Chacune des canalisations 180b comprend une extrémité radialement interne qui forme le débouché précité et une extrémité radialement externe qui forme un port 190 de raccordement à une conduite d'huile 192. Le port 190 forme une partie femelle et une extrémité de la conduite 192 forme une partie mâle engagée de manière étanche dans le port 190. Ces conduites 192 sont destinées à traverser le stator du réducteur 48, des bras tubulaires 42b du carter d'entrée 42 qui sont situés dans la veine d'écoulement du flux primaire F2 puis des aubes directrices 42a qui sont situées dans la veine d'écoulement du flux secondaire F3, pour rejoindre le système de lubrification situé dans la nacelle (voir figure 1). Une alternative consiste à monter le système de lubrification dans le moteur (entre la veine primaire - compresseurs 14 et 16) et le carter 70 de la veine secondaire, de façon à ce que ces conduites 192 ne traversent pas le flux secondaire F3.

L'anneau 180 a une forme générale cylindrique et comprend un rebord cylindrique amont 200a et un rebord cylindrique aval 200b. Ces rebords 200a, 200b ont des diamètres identiques ou similaires.

Comme cela est représenté schématiquement à la figure 2, l'anneau 180 peut être relié par une liaison souple au porte-satellites 48d. Dans l'exemple représenté, cette liaison souple comprend une paroi 202 en forme de soufflet.

Une frette 204 est fixée à l'intérieur de l'anneau 180 de façon à recouvrir sa surface 180a. Cette frette 204 s'étend sur une majeure partie de la longueur de l'anneau 180 et comprend un rebord annulaire 204a radialement externe à son extrémité amont qui est en appui axial sur une portée cylindrique de l'anneau 180. Comme son nom l'indique, la frette 204 est montée par frettage dans l'anneau 180. Le frettage associé à l'appui de son rebord 204a assure l'immobilisation de la frette 204 vis-à-vis de l'anneau 180.

La frette 204 comprend une rangée annulaire d'orifices radiaux 206 au droit de chacune des canalisations 180b. Par ailleurs, une gorge annulaire 208 est formée à la périphérie interne de l'anneau 180 et au droit de chacune des canalisations 180b, cette gorge 208 étant fermée à l'intérieur par la frette 204. On comprend donc que chaque canalisation 180b alimente une gorge 208 et que chaque gorge 208 distribue de l'huile aux orifices 206 de la frette 204.

La frette 204 comprend une surface cylindrique externe de frettage qui est au contact de la surface interne 180a de l'anneau 180, et une surface cylindrique interne de centrage destinée à être séparée d'une distance radiale prédéterminée de la surface externe 182a de l'arbre 182 pour définir le palier lisse P.

L'arbre 182 ne porte pas de frette. Cette suppression permet de réduire de trois le nombre d'interfaces d'empilage de tolérances. Conséquemment, la tolérance résultante sur les jeux est fortement réduite par réduction du nombre de contributeurs et donc les jeux résultants sont réduits, en particulier entre rotor et stator.

L'arbre 182 comporte une surface cylindrique externe 182a s'étendant à l'intérieur de la surface 180a et des canalisations internes 182b d'huile qui débouchent chacune sur la surface 182a. Les canalisations 182b ont toutes une orientation radiale et sont disposées les unes derrière les autres le long de l'axe A. Elles sont au nombre de trois dans l'exemple représenté.

Une gorge annulaire 210 est formée à la périphérie externe de l'arbre 182 et au droit de chacune des canalisations 182b.

Chacune des canalisations 182b est reliée à une conduite 212 qui peut être intégrée à l'arbre 182. Les conduites 212 s'étendent axialement dans l'arbre 182 et chacune de ces conduites 212 comprend une extrémité aval reliée à une des canalisations 182b. Les extrémités amont des conduites 212 débouchent à l'amont de l'arbre 182 et l'une de ces conduites 212, par exemple celle visible en section dans les figures, est par exemple raccordée à l'actionneur 62 précitée.

Un premier palier à roulement 220 est monté entre le rebord 200b de l'anneau 180 et l'extrémité aval de l'arbre 182.

Le palier 220 est ici à roulement et comprend des rouleaux qui sont disposés entre deux pistes de roulement, respectivement interne et externe.

La piste de roulement interne du palier 220 est intégrée à l'arbre 182, c'est à dire qu'il n'y a pas de bague interne rapportée sur l'arbre 182 pour le palier 220.

La piste de roulement externe du palier 220 est formée par une bague externe 224 montée à l'intérieur du rebord 200b. Cette bague 224 est en appui axial sur une portée cylindrique de la périphérie interne du rebord 200b, situé à l'amont. A l'aval, la bague 224 est retenue axialement par un écrou 226 vissé à la périphérie interne du rebord 200b ou une frette engagée dans ce rebord.

La piste de roulement interne du palier 230 est intégrée à l'arbre 182, c'est à dire qu'il n'y a pas non plus de bague interne rapportée sur l'arbre 182 pour le palier 230.

La piste de roulement externe du palier 230 est formée par une bague externe 234 montée à l'intérieur du rebord 200a. Cette bague 234 est en appui axial sur une portée cylindrique de la périphérie interne du rebord 200a, situé à l'aval. A l'amont, la bague 234 est retenue axialement par un écrou 228 vissé à la périphérie interne du rebord 200a ou une frette engagée dans ce rebord.

Avantageusement, comme cela est visible à la figure 4, la surface externe 182a de l'arbre 182 et les pistes internes de roulement des paliers 220 (intégrés à l'arbre 182) ont un même diamètre D1 et s'étendent sans discontinuité dans le prolongement les unes des autres. On comprend ainsi que l'arbre 182 peut être monté à l'intérieur de l'anneau 180 par translation axiale, l'anneau 180 pouvant être pré-équipé avec la frette 204 et les bagues 224, 234 et les rouleaux des paliers 220, 230 juste avant cette translation.

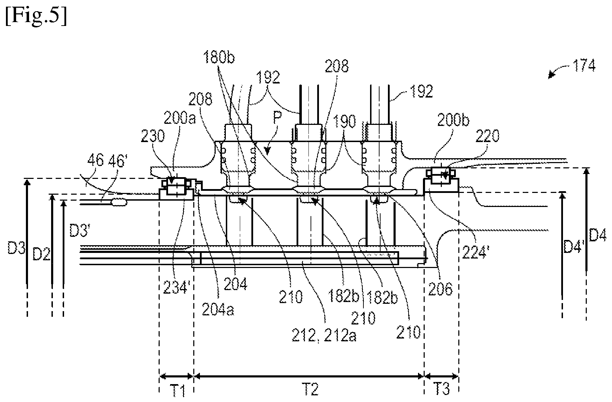

Un second mode de réalisation de l'invention est représenté à la figure 5. Ce mode de réalisation est très proche du précédent mode de réalisation et en diffère essentiellement en ce que les pistes externes de roulement des paliers 220, 230 sont intégrées à l'anneau 180 et ce sont au contraire les pistes internes de roulement de ces paliers qui sont formées par des bagues internes 224', 234' montées sur l'arbre 182.

Le palier amont 230 a un diamètre externe D3 défini par la piste de roulement intégrée à l'anneau 180, et un diamètre interne D3' défini par la bague interne 234'. Le palier aval 220 a un diamètre externe D4 défini par la piste de roulement intégrée à l'anneau 180, et un diamètre interne D4' défini par la bague interne 224'.

Dans l'exemple représenté, D2 est compris entre D3 et D3', et D2 est inférieur à D4 et D4'. De plus, D3' < D4' < D3 < D4.

On constate ainsi que l'arbre 182 est étagé et comprend des tronçons de diamètres différents sur lesquels sont montées les bagues 224', 234' des paliers 220, 230 et autour duquel s'étend la frette 204. L'arbre 182 comprend un tronçon amont T1 de plus petit diamètre D3' pour le montage du palier 230, un tronçon intermédiaire de diamètre D2 pour la formation du palier lisse P, et un tronçon aval de diamètre D4' pour le montage du palier 220.

De la même façon, l'anneau 180 est étagé et comprend des tronçons de diamètres internes différents dans lesquels sont montés les paliers 220, 230 et la frette 204. Les rebords cylindriques 200a, 200b ont ainsi des diamètres internes différents.

Ce mode de réalisation permet de réduire le nombre de contributeurs de tolérances. Conséquemment, la tolérance résultante sur les jeux est fortement réduite par réduction du nombre de contributeurs et donc les jeux résultants sont réduits, en particulier entre rotor et stator.

Dans l'exemple représenté des figures 2 et 5, on constate que la soufflante 12 est entraînée par un arbre 46 qui est guidé par des paliers 54, 58 et qui est accouplé à l'arbre 182 du dispositif 174.

Le dispositif 174 de la figure 5 peut être monté de la façon suivante. La bague 224' et les rouleaux du palier 220 sont tout d'abord montés sur l'arbre 182, par translation axiale depuis l'amont, jusqu'à venir en butée axiale sur un épaulement cylindrique de l'arbre 182. L'arbre 182 est ensuite engagé dans l'anneau 180 par translation axiale depuis l'aval, jusqu'à ce que les rouleaux du palier 220 soient engagés dans le rebord 200b de l'anneau 180. La bague 234' et les rouleaux du palier 230 sont ensuite montés sur l'arbre 182, par translation axiale depuis l'amont, jusqu'à venir en butée axiale sur un épaulement cylindrique de l'arbre 182. Les rouleaux de ce palier 230 sont alors engagés dans le rebord 200a de l'anneau 180. Enfin, l'arbre 46 est monté sur l'arbre 182, par translation axiale depuis l'amont, jusqu'à venir en butée axiale sur la bague interne du palier 130. Les arbres 46, 182 étant solidarisés en rotation par des jeux de cannelures 46' complémentaires. Les arbres 46, 182 sont fixés à l'actionneur 62 pour alimenter en huile ses chambres.

Le palier lisse P est alimenté en huile directement par les canalisations 180b de l'anneau 180. On comprend que l'épaisseur de l'espace est calculée pour que des fuites maitrisées aient lieu aux interfaces entre les canalisations 180b, 182b, de façon à alimenter le palier lisse P. L'huile se répand alors sur toute l'étendue axiale du palier lisse P et jusqu'aux paliers à roulement 220, 230 en vue de leur lubrification.

L'épaisseur radiale du palier lisse est par exemple comprise entre 20 et 40µm.

On entend par « voie » du dispositif 174, l'association d'une canalisation 180b de l'anneau 180 avec une canalisation 182b de l'arbre 182. Dans l'exemple représenté, le dispositif 174 comprend trois voies. De manière préférée, une des voies est utilisée pour l'alimentation en huile de l'actionneur 62, et une autre des voies est utilisée pour le retour d'huile de l'actionneur 62. Enfin, la dernière voie peut être utilisée pour la protection hydraulique de l'actionneur ou pour alimenter en huile le réducteur 48.

Dans une variante de réalisation non représentée, le dispositif pourrait être monté en aval du réducteur. L'arbre du dispositif serait alors accouplé en rotation au porte-satellites du réducteur par exemple, dans le cas où ce dernier serait mobile en rotation.

Le dispositif 174 est par exemple configuré pour alimenter l'actionneur 62 à une pression d'huile comprise entre 2 et 200 bars, et de préférence entre 5 et 130 bars.

## Revendications

1. Module de soufflante pour une turbomachine d'aéronef, ce module comportant une soufflante (12) qui comporte un arbre de soufflante (46) et des aubes de soufflante (12a) à calage variable, et un dispositif (174) de transfert d'huile configuré pour assurer un transfert d'huile entre un stator et un actionneur (62) qui est solidaire en rotation de l'arbre de soufflante (46) et qui est configuré pour contrôler le calage des aubes de soufflante, ce dispositif comportant :
- un anneau de stator (180) comportant une première surface cylindrique (180a), par exemple interne, et des canalisations internes (180b) d'huile qui débouchent chacune sur ladite première surface cylindrique (180a), et
- un arbre (182) engagé dans ou sur ledit anneau (180) et comportant une seconde surface cylindrique (182a) s'étendant à l'intérieur ou autour de ladite première surface cylindrique (180a), l'arbre comportant des canalisations internes (182b) d'huile qui débouchent chacune sur ladite seconde surface cylindrique (182a),
**caractérisé en ce qu'**il comprend en outre :
- un palier lisse (P) situé entre lesdites première et seconde surfaces cylindriques (180a, 182a), et
- des paliers à roulement (220, 230) montés entre l'anneau (180) et l'arbre (182), de part et d'autre du palier lisse (P), chacun de ces paliers à roulement comportant des éléments roulants entre deux pistes annulaires de roulement,
**en ce que** l'un des éléments choisi parmi l'anneau (180) et l'arbre (182) porte des bagues (224, 234, 224', 234') définissant des premières pistes des paliers à roulement, les secondes pistes de roulement de ces paliers à roulement étant intégrées à l'autre de ces éléments,
et **en ce que** le palier lisse (P) est réalisé par une seule frette (204) intercalée entre les première et seconde surfaces cylindriques (180a, 182a), et fixée sur l'un desdits éléments.

2. Module selon la revendication 1, dans lequel l'un des éléments porte les bagues (224, 234) des paliers à roulement ainsi que la frette (204).

3. Module selon la revendication 2, dans lequel la frette a deux surfaces cylindriques s'étendant l'une autour de l'autre, dont une surface cylindrique de frettage et une surface cylindrique de centrage, cette surface cylindrique de centrage ayant un diamètre (D1) égal aux diamètres des secondes pistes de roulement.

4. Module selon la revendication 2 ou 3, dans lequel l'anneau (180) porte les bagues (224, 234) et la frette (204).

5. Module selon la revendication 4, dans lequel les bagues (224, 234) des paliers à roulement (220, 230) ont des diamètres internes (D1) identiques.

6. Module selon la revendication 1, dans lequel l'un des éléments porte les bagues (224', 234') et l'autre des éléments porte la frette (204).

7. Module selon la revendication 6, dans lequel l'anneau (180) porte la frette (204) et l'arbre (182) porte les bagues (224', 234').

8. Module selon la revendication 7, dans lequel la frette (204) a deux surfaces cylindriques s'étendant l'une autour de l'autre, dont une surface cylindrique de frettage sur l'anneau (180) et une surface cylindrique de centrage sur l'arbre (182), les bagues (224', 234') des paliers à roulement (220, 230) ayant des diamètres internes (D3', D4') différents l'un de l'autre et différents du diamètre (D2) de la surface cylindrique interne de la frette (204).

9. Module selon l'une des revendications précédentes, dans lequel la frette (204) comprend des orifices (206) qui sont d'une part situés en regard des débouchés des canalisations (180b, 182b) de l'un des éléments, et qui sont en communication fluidique avec les canalisations de l'autre des éléments par l'intermédiaire de gorges annulaires (208, 210) formées au niveau des débouchés des canalisations de cet autre élément.

10. Module selon l'une des revendications précédentes, dans lequel la soufflante (12) est entrainée en rotation par un réducteur (48), ledit dispositif étant monté en amont du réducteur et étant configuré pour alimenter en huile le réducteur ainsi que l'actionneur, voire également le réducteur.

11. Module selon la revendication précédente, dans lequel la soufflante (12) est entraînée par l'arbre de soufflante (46) qui est guidé par des paliers à roulement (54, 58) et qui est accouplé à l'arbre (182) du dispositif (174).

## Patentansprüche

1. Gebläsemodul für ein Turbotriebwerk eines Luftfahrzeugs, wobei dieses Modul ein Gebläse (12), das eine Gebläsewelle (46) und Gebläseschaufeln (12a) mit variabler Feststellposition aufweist, und eine Vorrichtung (174) zum Transferieren von Öl aufweist, die konfiguriert ist, um einen Transfer von Öl zwischen einem Stator und einem Aktuator (62) sicherzustellen, der mit der Gebläsewelle (46) drehfest ist und der konfiguriert ist, um die Feststellposition der Gebläseschaufeln zu steuern, wobei diese Vorrichtung aufweist:
- einen Statorring (180), der eine erste, beispielsweise eine innere, zylindrische Oberfläche (180a) und innere Ölkanäle (180b) umfasst, die jeweils auf der ersten zylindrischen Oberfläche (180a) münden, und
- eine Welle (182), die in oder an dem Ring (180) in Eingriff steht und eine zweite zylindrische Oberfläche (182a) aufweist, die sich im Inneren der ersten zylindrischen Oberfläche (180a) oder um sie herum erstreckt, wobei die Welle innere Ölkanäle (182b) aufweist, die jeweils auf der zweiten zylindrischen Oberfläche (182a) münden,
**dadurch gekennzeichnet, dass** es weiter umfasst:
- ein Gleitlager (P), das sich zwischen der ersten und zweiten zylindrischen Oberfläche (180a, 182a) befindet, und
- Wälzlager (220, 230), die zwischen dem Ring (180) und der Welle (182) auf beiden Seiten des Gleitlagers (P) montiert sind, wobei jedes dieser Wälzlager rollende Elemente zwischen zwei ringförmigen Rollbahnen aufweist,
dadurch, dass eins der Elemente, ausgewählt aus dem Ring (180) und der Welle (182) Ringe (224, 234, 224', 234') trägt, die erste Bahnen der Wälzlager definieren, wobei die zweiten Rollbahnen dieser Wälzlager in das andere von diesen Elementen integriert sind,
und dadurch, dass das Gleitlager (P) mit einem einzelnen Schrumpfring (204) ausgeführt ist, der zwischen der ersten und zweiten zylindrischen Oberfläche (180a, 182a) eingelegt und an einem der Elemente befestigt ist.

2. Modul nach Anspruch 1, wobei eins der Elemente die Ringe (224, 234) der Wälzlager sowie den Schrumpfring (204) trägt.

3. Modul nach Anspruch 2, wobei der Schrumpfring zwei zylindrische Oberflächen aufweist, die sich umeinander erstrecken, eine zylindrische Schrumpffläche und eine zylindrische Zentrierfläche, wobei diese zylindrische Zentrierfläche einen Durchmesser (D1) aufweist, der dem Durchmesser der zweiten Rollbahnen entspricht.

4. Modul nach Anspruch 2 oder 3, wobei der Ring (180) die Ringe (224, 234) und den Schrumpfring (204) trägt.

5. Modul nach Anspruch 4, wobei die Ringe (224, 234) der Wälzlager (220, 230) identische Innendurchmesser (D1) aufweisen.

6. Modul nach Anspruch 1, wobei eins der Elemente die Ringe (224', 234') und das andere Element den Schrumpfring (204) trägt.

7. Modul nach Anspruch 6, wobei der Ring (180) den Schrumpfring (204) trägt und die Welle (182) die Ringe (224', 234') trägt.

8. Modul nach Anspruch 7, wobei der Schrumpfring (204) zwei zylindrische Oberflächen aufweist, die sich umeinander erstrecken, eine zylindrische Schrumpffläche am Ring (180) und eine zylindrische Zentrierfläche an der Welle (182), wobei die Ringe (224', 234') der Wälzlager (220, 230) Innendurchmesser (D3', D4') aufweisen, die sich voneinander unterscheiden und sich von dem Durchmesser (D2) der inneren zylindrischen Oberfläche des Schrumpfrings (204) unterscheiden.

9. Modul nach einem der vorhergehenden Ansprüche, wobei der Schrumpfring (204) Öffnungen (206) umfasst, die sich einerseits gegenüber den Ausmündungen der Kanäle (180b, 182b) von einem der Elemente befinden und die über ringförmige Ausnehmungen (208, 210), die im Bereich der Ausmündungen der Kanäle des anderen Elements ausgebildet sind, mit den Kanälen dieses anderen Elements in strömungstechnischer Kommunikation stehen.

10. Modul nach einem der vorhergehenden Ansprüche, wobei das Gebläse (12) von einem Untersetzungsgetriebe (48) in Drehung versetzt wird, wobei die Vorrichtung in Strömungsrichtung vor dem Untersetzungsgetriebe montiert ist und konfiguriert ist, um dem Untersetzungsgetriebe sowie dem Aktuator und sogar dem Untersetzungsgetriebe Öl zuzuführen.

11. Modul nach dem vorhergehenden Anspruch, wobei das Gebläse (12) von der Gebläsewelle (46) angetrieben wird, die von den Wälzlagern (54, 58) geführt wird und die mit der Welle (182) der Vorrichtung (174) gekoppelt ist.

## Claims

1. A fan module for an aircraft turbine engine, this module comprising a fan (12) which comprises a fan shaft (46) and variable pitch fan vanes (12a), and an oil transfer device (174) configured to ensure a transfer of oil between a stator and an actuator (62) that is secured in rotation to the fan shaft (46) and that is configured to control the pitch of the fan vanes, this device comprising:
- a stator annulus (180) comprising a first cylindrical surface (180a), for example internal, and internal oil pipes (180b) which each open onto said first cylindrical surface (180a), and
- a shaft (182) engaged in or on said annulus (180) and comprising a second cylindrical surface (182a) extending inside or around said first cylindrical surface (180a), the shaft comprising internal oil pipes (182b) which each open onto said second cylindrical surface (182a),
**characterised in that** it further comprises:
- a plain bearing (P) located between said first and second cylindrical surfaces (180a, 182a), and
- rolling bearings (220, 230) mounted between the annulus (180) and the shaft (182), on either side of the plain bearing (P), each of these rolling bearings comprising rolling elements between two annular rolling tracks,
**in that** one of the elements chosen from the annulus (180) and the shaft (182) carries rings (224, 234, 224', 234') defining first tracks of the rolling bearings, the second rolling tracks of these rolling bearings being integrated with the other of these elements,
and **in that** the plain bearing (P) is formed by a single shrink ring (204) interposed between the first and second cylindrical surfaces (180a, 182a) and attached to one of said elements.

2. The module according to claim 1, wherein one of the elements carries the rings (224, 234) of the rolling bearings and the shrink ring (204).

3. The module according to claim 2, wherein the shrink ring has two cylindrical surfaces extending around each other, including a cylindrical shrink-fit surface and a cylindrical centering surface, this cylindrical centering surface having a diameter (D1) equal to the diameters of the second rolling tracks.

4. The module according to claim 2 or 3, wherein the annulus (180) carries the rings (224, 234) and the shrink ring (204).

5. The module according to claim 4, wherein the rings (224, 234) of the rolling bearings (220, 230) have identical internal diameters (D1).

6. The module according to claim 1, wherein one of the elements carries the rings (224', 234') and the other of the elements carries the shrink ring (204).

7. The module according claim 6, wherein the annulus (180) carries the shrink ring (204) and the shaft (182) carries the rings (224', 234').

8. The module according to claim 7, wherein the shrink ring (204) has two cylindrical surfaces extending around each other, including a cylindrical shrink-fit surface on the annulus (180) and a cylindrical centering surface on the shaft (182), the rings (224', 234') of the rolling bearings (220, 230) having internal diameters (D3', D4') different from each other and different from the diameter (D2) of the internal cylindrical surface of the shrink ring (204).

9. The module according to one of the preceding claims, wherein the shrink ring (204) comprises orifices (206) which are on the one hand located opposite the outlets of the pipes (180b, 182b) of one of the elements, and which are in fluidic communication with the pipes of the other of the elements by means of annular gorges (208, 210) formed at the level of the outlets of the pipes of this other element.

10. The module according to one of the preceding claims, wherein the fan (12) is driven in rotation by a reducer (48), said device being mounted upstream of the reducer and being configured to supply oil to the reducer and to the actuator, and possibly also to the reducer.

11. The module according to the preceding claim, wherein the fan (12) is driven by the fan shaft (46) which is guided by rolling bearings (54, 58) and which is coupled to the shaft (182) of the device (174).
